# EUROPEAN PATENT APPLICATION

(11) **EP 1 531 643 A2**
(43) Date of publication of application: **18.05.2005**
(21) Application number: 04026753.6
(22) Date of filing: 10.11.2004
(51) Int. Cl.: H04Q 7/32

(54) **Mobile telephone set having the capability to quickly select optimum base station**

(30) Priority: 11.11.2003 JP 2003380850
(71) Applicant: NEC CORPORATION, Tokyo (JP)
(72) Inventor: Ogata, Shigeru, Minatu-ku, Tokyo (JP)
(74) Representative: Betten & Resch

(57) **Abstract**

A mobile telephone set is capable of quickly selecting a base station with which the mobile telephone set can communicate while the mobile telephone set is in motion, and is thus less liable to cause handovers. The mobile telephone set has a memory for storing specific information specifying base stations. When a transceiver of the mobile telephone set detects specific information from a base station, a controller of the mobile telephone set reads the specific information from the memory. If the detected specific information from the base station is included in the specific information read from the memory, then the controller selects the detected base station corresponding to the specific information. If the detected specific information from the base station is not included in the specific information read from the memory, then the controller selects a base station providing a highest electric field intensity.

## Description

### BACKGROUND OF THE INVENTION

### 1. Field of the Invention:

The present invention relates to a mobile telephone set, and more particularly to a mobile telephone set that is capable of quickly selecting a base station which is most relevant while the mobile telephone set is in motion.

### 2. Description of the Related Art:

Heretofore, the operation of conventional portable telephone sets to wait for a call and select a base station to communicate with is started by searching for a possible frequency for an annunciation signal from a base station. Such a process takes time until a candidate is found. The time-consuming process poses problems when the portable telephone set is moving at a high speed. Therefore, it is necessary for the portable telephone set to quickly select a base station.

Various proposals have been made to meet such a requirement.

For example, JP7-143544A proposes a mobile communication terminal device for performing communications compatible with a plurality of telecommunications carriers. The proposed mobile communication terminal device has a positioning means for detecting the present position thereof, a base station positional information memory means for storing positional information of base stations belonging to a plurality of telecommunications carriers and identification information of the telecommunications carriers, and an optimum base station selecting means for selecting a base station belonging to a desired telecommunications carrier and located in a most relevant position based on the detected position output from the positioning means and the information output from the base station positional information memory means. Prior to the proposed mobile communication terminal device, it may not necessarily be possible to select a closest one of a plurality of base stations according to a desired communication system. However, the proposed mobile communication terminal device is capable of selecting a closest one of a plurality of base stations run by a desired telecommunications carriers or according to a desired communication system, and can realize communications that suffer reduced communication errors and are of high quality and stable. Specifically, the proposed mobile communication terminal device can select a base station that is located in an optimum position from the current position thereof, can select a base station providing a large signal intensity, and can realize high-quality stable communications that suffer reduced communication errors.

JP2000-213948A discloses a mobile body map matching apparatus for estimating the current position of a mobile unit. The disclosed mobile body map matching apparatus has a base station for a portable terminal unit, a portable terminal unit having an electric field measuring means for measuring an electric field at a desired spot that is radiated from the base station, a field intensity data memory means for storing a measured electric field intensity value, a smoothing means for smoothing the stored electric field intensity value, a direction identifying means for identifying the direction in which the portable unit is moving from the smoothed electric field intensity data, traced information storage means for storing traced information representing the path along which the portable unit has moved, map storage means for storing digital map information, field-to-coordinate converting means for outputting coordinates on the map based on the electric field intensity data, and a link identifying means for estimating the current position of the portable unit from the direction obtained from the direction identifying means, the traced information, the digital map information, and the coordinates output from the field-to-coordinate converting means.

JP2001-309420A discloses a radio communication system comprising a plurality of base stations each having a predetermined beam area, a mobile terminal unit for requesting information through either one of the base stations and receiving the requested information through at least one of the base stations, and a radio control station connected to the base stations and having a route predicting means for predicting a route along which the mobile terminal unit will move based on terminal position information acquired from the mobile terminal unit when the information request is received, a base station selecting means for selecting a base station having a beam area that includes at least a portion of the route, and an information sending means for sending the requested information to the selected base station.

JP2002-95036A reveals a mobile telephone display device having an input means for entering data, memory means for storing data entered from the input means in association with the type of the data, a position recognizing means for recognizing a particular position which is the closest at present by comparing the information stored by the memory means and the data entered by the input means, and a display control means for displaying a current position based on the recognized position output from the position recognizing means.

The mobile communication terminal device disclosed in JP7-143544A has not been proposed from the standpoint of quickly selecting a base station in an optimum position, though it is capable of selecting a base station that is located in an optimum position from the current position. Therefore, it may take time for the disclosed mobile communication terminal device to select a base station that is located in an optimum position, and the disclosed mobile communication terminal device may possibly cause handovers.

Prior to the mobile body map matching apparatus disclosed in JP2000-213948A, conventional apparatus have suffered various problems. For example, in indoor environments, walkers cannot be navigated because the GPS (Global Positioning System) technology is not available and map matching for the walkers is not established. It is burdensome for walkers to carry a gyro unit for outdoor positional detection. The position detecting technique based on an electric field intensity detects a position in a single electric field intensity measuring cycle, but the detected positional information is not highly reliable because the electric field intensity tends to change even when detected in the same position. The presently available position detecting technique based on an electric field intensity is not effective if an electric field intensity from a base station cannot be measured. Furthermore, the presently available position detecting technique based on an electric field intensity needs to have a position recognizing device such as a non-contact IC card or the like installed at a certain spot for recognizing the position of a walker in an indoor environment, and hence is expensive. The mobile body map matching apparatus disclosed in JP2000-213948A has been proposed in view of the above shortcomings. However, the disclosed mobile body map matching apparatus is merely capable of simply and accurately detecting the position of a walker, and is not designed to quickly select a base station while the mobile telephone set is in rapid motion.

The radio communication system disclosed in JP2001-309420A has been proposed in view of the problem that since a wired LAN (Local Area Network) has a standard communication rate of 10 Mbits/sec., the communication rate in a high-speed mobile environment is not sufficient to enjoy services available through the Internet. To solve the above problem, the disclosed radio communication system allows the user to enjoy high-speed reliable downloading services through packet communications based on Internet access made by high-speed mobile bodies such as cars or the like. The disclosed radio communication system is not designed to allow a mobile telephone set to quickly select a base station while the mobile telephone set is in motion.

The mobile telephone display device disclosed in JP2002-95036A permits a mobile telephone set to quickly recognize the current positional information thereof on a required route. However, the revealed mobile telephone display device is not designed to allow a mobile telephone set to quickly select a base station while the mobile telephone set is in motion.

### SUMMARY OF THE INVENTION

It is therefore an object of the present invention to provide a mobile telephone set that is capable of quickly selecting a base station with which the mobile telephone set can communicate while the mobile telephone set is in motion, and is thus less liable to cause handovers.

To achieved the above object, there is provided in accordance with the present invention a mobile telephone set comprising detecting means for detecting specific information from base stations, memory means for storing specific information specifying base stations, and control means for reading the specific information from the memory means and, if specific information from a base station detected by the detecting means is included in the specific information read from the memory means, selecting the base station whose specific information is detected by the detecting means.

Specific information specifying base stations is stored in advance by the memory means. If specific information from a base station detected by the detecting means is present in the specific information stored by the memory means, the base station corresponding to the specific information is selected as a base station to communicate with. In this manner, the mobile telephone set performs less operation to search for a nearby base station in switching between base stations, and can quickly select a base station. Therefore, the mobile telephone set is less liable to cause handovers, i.e., to have less switching between base stations.

Particularly, the memory means should preferably store specific information specifying base stations to communicate with, in the order of positions that the mobile telephone set successively takes when the mobile telephone set moves along at least one route. If specific information from a base station detected by the detecting means when the mobile telephone set is in one of the positions is stored by the memory means, then the control means selects the base station whose specific information is detected by the detecting means as a basic station to communicate with, and if specific information from a base station detected by the detecting means when the mobile telephone set is in one of the positions is not stored by the memory means, then the control means selects a base station providing a highest electric field intensity as a basic station to communicate with.

The above and other objects, features, and advantages of the present invention will become apparent from the following description with reference to the accompanying drawings which illustrate an example of the present invention.

### BRIEF DESCRIPTION OF THE DRAWINGS

Fig. 1 is block diagram of a mobile telephone set according to an embodiment of the present invention;
Fig. 2 is a flowchart of a processing sequence performed by the mobile telephone set shown in Fig. 1 for selecting base stations to communicate with;
Fig. 3 is a view showing a route along which the mobile telephone set moves and base stations with which the mobile telephone set communicates; and
Fig. 4 is a diagram showing an example of specific information stored in a storage unit of the mobile telephone set.

### DESCRIPPTION OF THE PREFERRED EMBODIMENT

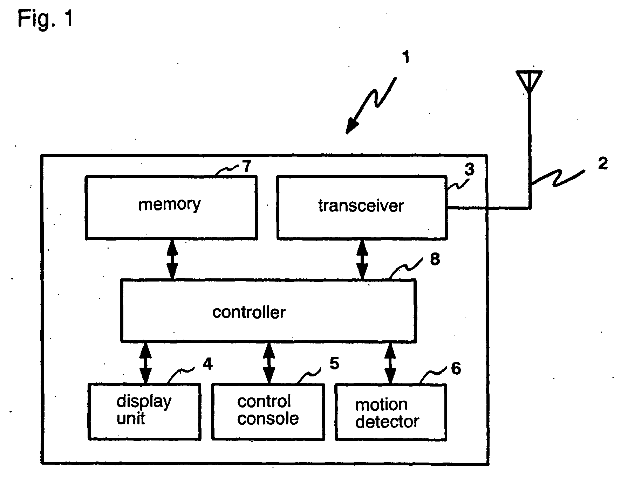

Referring now to Fig. 1, mobile telephone set 1 according to an embodiment of the present invention is a terminal unit such as a portable telephone set, an automobile telephone set, a PHS set, or the like, and has antenna 2, transceiver 3, display unit 4, control console 5, motion detector 6, memory 7, and controller 8.

Antenna 2 serves to receive radio signals. Transceiver 3 communicates with base stations (not shown) at a proper frequency. Display unit 4 comprises a liquid display panel or the like. Control console 5 comprises a ten-key pad, a power supply switch, and various selection keys. Motion detector 6 detects when mobile telephone set 1 is in motion.

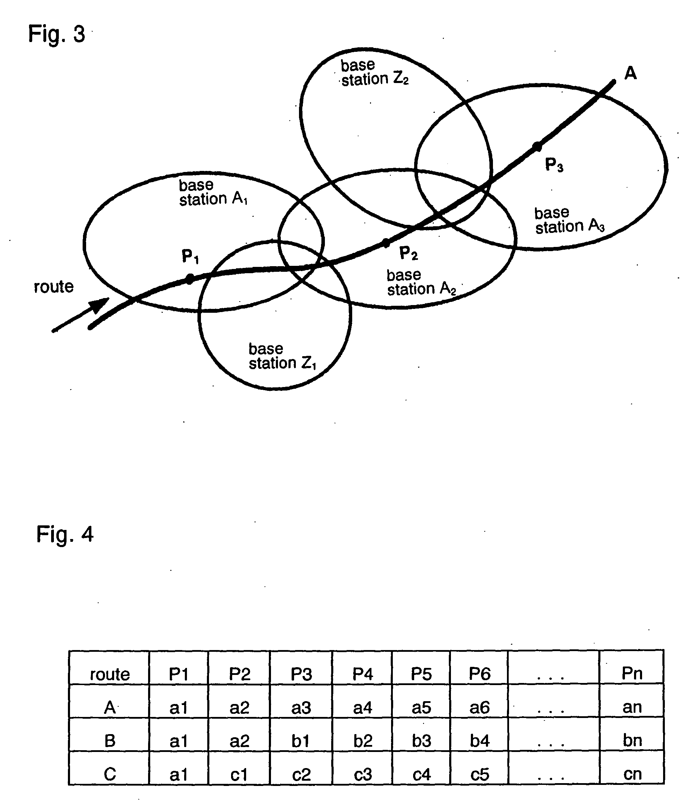

Memory 7 stores respective items of specific information of base stations with which mobile telephone set 1 is to communicate, in the order of positions that mobile telephone set 1 successively takes when mobile telephone set 1 moves along each route. By way of example, as shown in Fig. 4, memory 7 stores respective items a1, a2, a3, a4, a5, a6, ···, an of specific information that specify respective base stations A1, A2, A3, A4, A5, A6, ···, An with which mobile telephone set 1 is to communicate, at respective positions P1, P2, P3, P4, P5, P6, ···, Pn on route A. Positions P1, P2, P3, P4, P5, P6, ···, Pn may be spaced somewhat from route A. Similarly, memory 7 also stores respective items a1, a2, b1, b2, b3, b4, b5, b6, ···, bn of specific information that specify respective base stations A1, A2, B1, B2, B3, B4, B5, B6, ···, Bn with which mobile telephone set 1 is to communicate, at respective positions P1, P2, P3, P4, P5, P6, ···, Pn on route B. Memory 7 also stores respective items a1, c1, c2, c3, c4, c5, c6, ···, cn of specific information that specify respective base stations A1, C1, C2, C3, C4, C5, C6, ···, Cn with which mobile telephone set 1 is to communicate, at respective positions P1, P2, P3, P4, P5, P6, ···, Pn on route C. Base stations on various routes maybe registered including routes for rapid trains such as Tokaido bullet trains and Tohoku bullet trains and routes for high-speed cars such as expressways.

If transceiver 3 receives specific information (downstream control signal) specifying a base station from the base station that is detected as providing an electric field intensity in excess of a predetermined level at first position P1, then controller 8 reads the first item of specific information from memory 7. If the received specific information is included in the first item of specific information from memory 7, then controller 8 selects the base station corresponding to the specific information as a base station to communicate with. Thereafter, when mobile telephone set 1 moves from first position P1 to next position P2, controller 8 reads, from memory 7, the second item of specific information that is stored next to the specific information of the base station selected at position P1. If the read specific information includes specific information that is received in position P2 by transceiver 3 from a base station that is detected as providing an electric field intensity in excess of the predetermined level, then controller 8 selects the base station corresponding to the specific information as a base station to communicate with. Subsequently, the same process is repeated to select a base station to communicate with each time mobile telephone set 1 moves to a new position on the route. If specific information received from a base station by transceiver 3 is not included in the specific information stored in memory 7, then controller 8 selects a base station providing a highest electric field intensity as a base station to communicate with, in the same manner as with conventional portable telephone sets.

In Fig. 3, the present position of mobile telephone set 1 is covered by base station A1. When mobile telephone set 1 moves to positions covered by base station Z1 and base station A2 (covered earlier by base station Z1 than by base station A2), if controller 8 selects base station A1 and then base station A2, rather than selecting base station Z1 and then base station A2, i.e., if the specific information is registered such that controller 8 selects base station A1 and then base station A2 while mobile telephone set 1 is moving along the route indicated by the arrow, then mobile telephone set 1 is subject to less switching between base stations, and is kept in a better communication state.

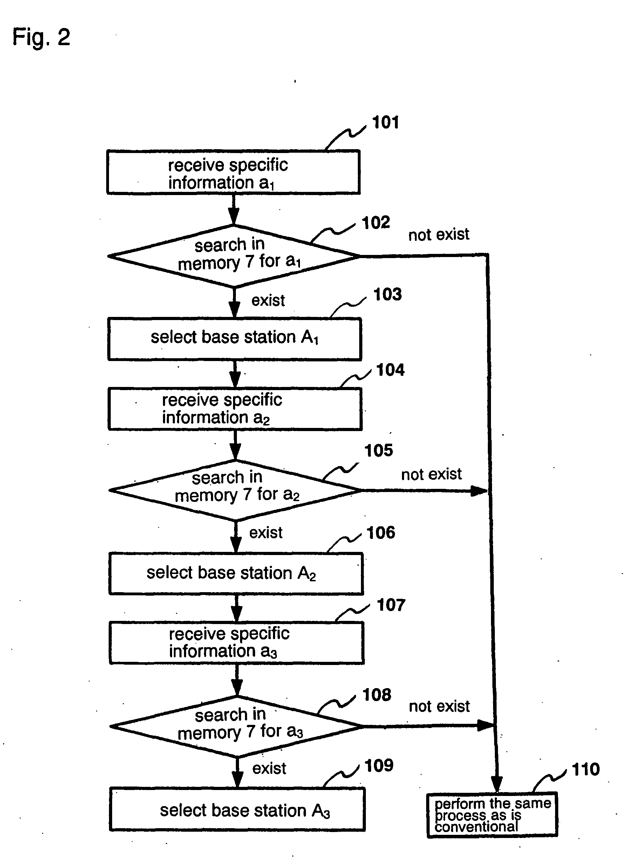

A processing sequence performed by mobile telephone set 1 for selecting base stations to communicate with will be described below with reference to Fig. 2.

At position P1, transceiver 3 of mobile telephone set 1 is receiving a downstream signal (control signal (specific information a1)) from base station A1 in step 101. Then, controller 8 determines whether specific information a1 of base station A1 received in step 101 is stored in memory 7 or not in step 102. If specific information a1 is stored in memory 7, then controller 8 selects base station A1 corresponding to specific information a1 stored in memory 7 as a base station with which mobile telephone set 1 is to communicate in step 103. Since specific information a1 is registered on routes A, B, C, position P1 is considered as being present on registered routes A, B, C. Then, it is assumed that mobile telephone set 1 moves from position P1 to position P2. Now, transceiver 3 of mobile telephone set 1 receives a downstream signal (control signal (assuming that the specific information is a2)) from a new base station in step 104. Controller 8 determines whether specific information a2 is stored next to specific information a1 in memory 7 or not in step 105. If specific information a2 is stored next to specific information a1, then controller 8 selects base station A2 corresponding to specific information a2 stored in memory 7 as a base station with which mobile telephone set 1 is to communicate in step 106. In the present embodiment, because specific information a2 is registered on routes A, B, position P2 is considered as being present on registered routes A, B. It is then assumed that mobile telephone set 1 moves from position P2 to position P3. Transceiver 3 of mobile telephone set 1 receives a downstream signal (control signal (assuming that the specific information is a3)) from a new base station in step 107. Controller 8 determines whether specific information a3 is stored next to specific information a2 in memory 7 or not in step 108. If specific information a3 is stored next to specific information a2, then controller 8 selects base station A3 corresponding to specific information a3 stored in memory 7 as a base station with which mobile telephone set 1 is to communicate in step 109. In the present embodiment, because specific information a3 is registered on route A, position P3 is considered as being present on registered route A. Subsequently, base stations with which mobile telephone set 1 is to communicate are successively selected in the same manner as described above. Consequently, base stations with which mobile telephone set 1 is to communicate can quickly be selected. Mobile telephone set 1 is thus less liable to cause handovers.

If specific information ak is not stored in memory 7, then controller 8 judges that mobile telephone set 1 is not present on the registered routes, and performs the same process as is conventional for selecting a base station based on an electric field intensity, i.e., selects a base station providing a highest electric field intensity as a base station to communicate with, in step 110.

While a preferred embodiment of the present invention has been described using specific terms, such description is for illustrative purposes only, and it is to be understood that changes and variations may be made without departing from the spirit or scope of the following claims.

An embodiment of the present invention can be summarized as follows: a mobile telephone set is capable of quickly selecting a base station with which the mobile telephone set can communicate while the mobile telephone set is in motion, and is thus less liable to cause handovers. The mobile telephone set has a memory for storing specific information specifying base stations. When a transceiver of the mobile telephone set detects specific information from a base station, a controller of the mobile telephone set reads the specific information from the memory. If the detected specific information from the base station is included in the specific information read from the memory, then the controller selects the detected base station corresponding to the specific information. If the detected specific information from the base station is not included in the specific information read from the memory, then the controller selects a base station providing a highest electric field intensity.

## Claims

1. A mobile telephone set comprising:
detecting means for detecting specific information from base stations;
memory means for storing specific information specifying base stations; and
control means for reading the specific information from said memory means and, if specific information from a base station detected by said detecting means is included in the specific information read from said memory means, selecting the base station whose specific information is detected by said detecting means.

2. A mobile telephone set according to claim 1, wherein said memory means stores specific information specifying base stations to communicate with, in the order of positions that said mobile telephone set successively takes when the mobile telephone set moves along at least one route.

3. A mobile telephone set according to claim 2, wherein said control means is arranged such that if specific information from a base station detected by said detecting means when said mobile telephone set is in one of said positions is stored in said memory means, said control means selects the base station whose specific information is detected by said detecting means as a basic station to communicate with, and if specific information from a base station detected by said detecting means when said mobile telephone set is in one of said positions is not stored in said memory means, said control means selects a base station providing a highest electric field intensity as a basic station to communicate with.
